# EUROPEAN PATENT APPLICATION

(11) **EP 3 073 772 A1**
(43) Date of publication of application: **28.09.2016**
(21) Application number: 16151126.6
(22) Date of filing: 13.01.2016
(51) Int. Cl.: H04W 8/00

(54) **METHODS FOR HANDLING A MATCH REPORT OF A RESTRICTED PROXIMITY-BASED SERVICE (PROSE) DISCOVERY, AND APPARTUSES USING THE SAME**

(30) Priority: 24.03.2015 US 201562137257 P; 17.12.2015 US 201514972466
(71) Applicant: Acer Incorporated, Taipei County 221 (TW)
(72) Inventor: CHEN, Pei-Jung, 221 Taipei City (TW)
(74) Representative: 2K Patentanwälte Blasberg Kewitz & Reichel

(57) **Abstract**

A method for a Proximity-based Service (ProSe) functionality device to handle a match report is provided. The method includes the steps of: receiving a match report of a restricted ProSe discovery from a first User Equipment (UE);determining one or more second UEs associated with the first UE in the restricted ProSe discovery according to the match report;determining whether a change of a discovery permission between the first UE and the second UEs is ongoing; and rejecting the match report in response to the change of the discovery permission being ongoing, such that functionality associated with accepting the match report is not enabled.

## Description

### CROSS REFERENCE TO RELATED APPLICATIONS

This Application claims priority toU.S. Provisional Application No. 62/137,257, filed on March24, 2015, the entirety of which is incorporated by reference herein.This Application claims priority to U.S. Application No. 14/972,466, filed on December17, 2015, the entirety of which is incorporated by reference herein.

### BACKGROUND OF THE APPLICATION

### Field of the Application

The application generally relates to the restricted type of Proximity-based Service (ProSe) discovery, and more particularly, to methods and apparatuses for handling a match report of the restricted ProSe discovery.

### Description of the Related Art

In recent years, various wireless technologies have been developed, including Global System for Mobile communications (GSM) technology, General Packet Radio Service (GPRS) technology, Enhanced Data rates for Global Evolution (EDGE) technology, Wideband Code Division Multiple Access (WCDMA) technology, Code Division Multiple Access2000 (CDMA-2000) technology, Time Division-Synchronous Code Division Multiple Access (TD-SCDMA) technology, Worldwide Interoperability for Microwave Access (WiMAX) technology, Long Term Evolution (LTE) technology, LTE-Advanced (LTE-A) technology, and Time- Division LTE (TD-LTE) technology, etc. By employing one of the wireless technologies, a User Equipment (UE) may wirelessly connect to a service network for accessing the Internet or obtaining mobile services, including the Proximity-based Service (ProSe).

Using the LTE technology as an example, the ProSe is first introduced in Release 12 of the 3rd Generation Partnership Project (3GPP) specifications. The ProSe allows a UE todirectly discover and communicate with other UEs in its proximity region.There are two kinds of direct ProSe discovery: open ProSe discovery and restricted ProSe discovery. With open ProSe discovery, a UE does not put any limit on the UEs to be discovered.

On the other hand, with restricted ProSe discovery ,a UE can put limits on the UEs to be discovered. For example, when a user wants to see if a particularTwitter/Facebook friend is nearby, he/she may use his/her UE to perform the restricted ProSe discovery to find this friend. According to the 3GPP Technical Report (TR) 23.713, when a UE initiates an Announce request or Monitor request, it will send the Restricted ProSe Application (App) User IDs of itself and/or the UE(s) to be discovered to the ProSe function node in the service network. Next, the ProSe function node communicates with the ProSe App server to see if the UEshaving the Restricted AppUser IDs are allowed to discover each other, and if they do, the ProSe function node generates a ProSe code for the announcing UE(s) and a discovery filter for the monitoring UE. If a monitoring UE receives a ProSe code from its user's friend, this ProSe code will match with the discovery filter of the monitoring UE. Otherwise, if the monitoring UE receives a ProSe code from another user who is not its user's friend, the ProSe code will not match with the discovery filter of the monitoring UE.

However, a user may decide at any time to change the discovery permissions granted to other users. For example, Bob may want to revoke the friendship with Alice on Facebook.It usually takes time for the ProSe function node to communicate with the ProSe App server to apply the change of the discovery permissions and to decide whether to revoke the defriendedUE's discovery filter or allocate a new discovery filter and new ProSe code to the un-defriended UEs. During this permission change period, it is possible that the monitoring UE stilluses the old discovery filter and the announcing UE still uses the old ProSe code. As a result, a match report generated with the old discovery filter and the old ProSe code may be mistakenly accepted by the ProSe function node, and the monitoring UE may perform operations that are only allowed when the match report is accepted by the ProSe function node.

### SUMMARY

An embodiment of a method for a Proximity-based Service (ProSe) functionality device to handle a match reportis provided. The method comprises the steps of: receiving a match report of a restricted ProSe discovery from a first User Equipment (UE);determining one or more second UEs associated with the first UE in the restricted ProSe discovery according to the match report;determining whether a change of a discovery permission between the first UE and the second UEs is ongoing; and rejecting the match report in response to the change of the discovery permission being ongoing, such that functionality associated with accepting the match report is not enabled.

An embodiment of a Proximity-based Service (ProSe) functionality device is provided. The ProSe functionality device comprises reception circuitry, first determination circuitry, second determination circuitry, and prevention circuitry. The reception circuitry is configured to receive a match report of a restricted ProSe discovery from a first UE. The first determination circuitry is configured to determine one or more second UEs associated with the first UE in the restricted ProSe discovery according to the match report. The second determination circuitry is configured to determine whether a change of a discoverypermission between the first UE and the second UEs is ongoing. The prevention circuitry is configured to rejectthe match report in response to the change of the discovery permission being ongoing, such that functionality associated with accepting the match report is not enabled.

Other aspects and features will become apparent to those with ordinary skill in the art upon review of the following descriptions of specific embodiments of the methods and ProSe functionality devices for handling a match report of a restricted ProSe discovery.

### BRIEF DESCRIPTION OF DRAWINGS

The application can be more fully understood by reading the subsequent detailed description and examples with reference made to the accompanying drawings, wherein:
Fig. 1 is a block diagram of a wireless communication environment according to anexample embodiment;
Fig. 2 is a block diagram illustrating a User Equipment (UE) according to an example embodiment;
Fig. 3 is a block diagram illustrating a ProSe functionality device according to anexampleembodiment;
Fig. 4 is a flow chart illustrating a method for handling a match report of a restricted ProSe discovery according to anexampleembodiment;
Fig. 5 is a message sequence chart illustrating an Announce Request procedure according to an example embodiment;
Fig. 6 is a message sequence chart illustrating a Monitor Request procedure according to an example embodiment;
Fig. 7 is a message sequence chart illustrating a Match Report procedure according to anexample embodiment; and
Fig. 8 is aschematic diagram illustrating circuitry blocks of a ProSe functionality device according to anexample embodiment.

### DETAILED DESCRIPTION OF THE APPLICATION

The following description is made for the purpose of illustrating the general principles of the application and should not be taken in a limiting sense. It should be understood that the embodiments may be realized in software, hardware, firmware, or any combination thereof. The 3GPP specifications are used to teach the spirit of the application, and the application is not limited thereto.

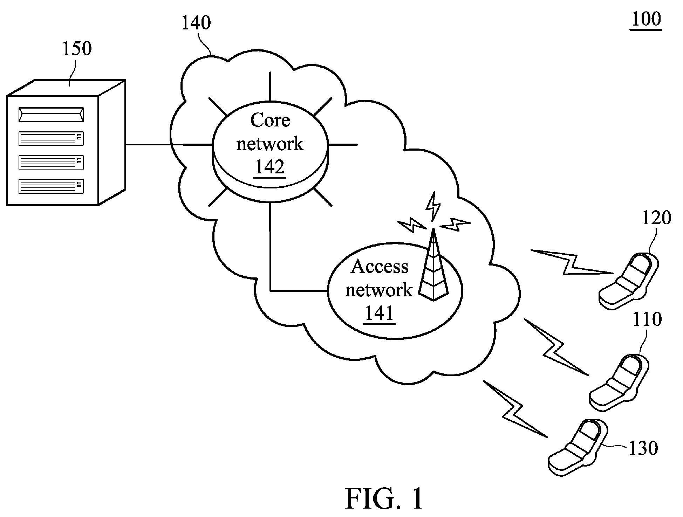

Fig. 1 is a block diagram of a wireless communication environment according to anexample embodiment. The wireless communication environment 100 includes three User Equipments (UEs) 110 to 130, a service network 140, and a ProSe App server 150.Each of the UEs 110 to 130 is wirelessly connected to the service network 140 for obtaining mobile services, including the Proximity-based Service (ProSe). In addition, the UEs 110 to 130 can discover each other by using the ProSe. Each of the UEs 110 to 130 may be a feature phone, a smartphone, a panel Personal Computer (PC), a laptop computer, or any mobile communication device supporting the wireless technology utilized by the service network 140. The service network 140 may be an LTE-based network, such as an LTE network, LTE-A network, or TD-LTE network.

Specifically, the service network 140 includes an access network 141 and a core network 142, wherein the access network 141 is responsible for processing radio signals, terminating radio protocols, and connecting the UEs 110 to 130 with the core network 142, while the core network 142 is responsible for performing mobility management and network-side authentication, interfacing with public/external networks (e.g., the Internet), and providing the ProSe. Each of the access network 141 and the core network 142 may include one or more network nodes for carrying out said functions. For example, if the service network 140 is an LTE/LTE-A/TD-LTE network, the access network 141 may be an Evolved-UTRAN (E-UTRAN) which includes at least an evolved NB (eNB) (e.g., a home eNB, macro BS, or pico BS), and the core network 142 may be an Evolved Packet Core (EPC) which includes a Home Subscriber Server (HSS), Mobility Management Entity (MME), Serving Gateway (S-GW),Packet Data Network Gateway (PDN-GW or P-GW), and ProSe functionality device (or may be referred to as ProSe function node).In another embodiment, the ProSe functionality device may be installed external to the core network 142.

The ProSe functionality device provides functionality for interworking via a reference point toward the third-party applications, authorization and configuration of the UEs 110 to 130 for discovery and direct communication, and enabling the functionality of the restricted ProSe discovery, etc.

The ProSe App server 150 is directly or indirectly connected to the service network 140 and the UEs 110 to 130.The ProSe App server 150 incorporates the ProSe capability for building the application functionality, such as, specific agencies in the public safety cases or social media (e.g., Twitter and Facebook) in the commercial cases. These applications are defined outside the 3GPP architecture but there may be reference points toward 3GPP entities. The ProSe App server 150 can communicate toward an application in one or more of the UEs 110 to 130.Specifically, the ProSe App server 150 allocates and maintains the Restricted ProSe App User IDs for the announcing UE and the monitoring UE.

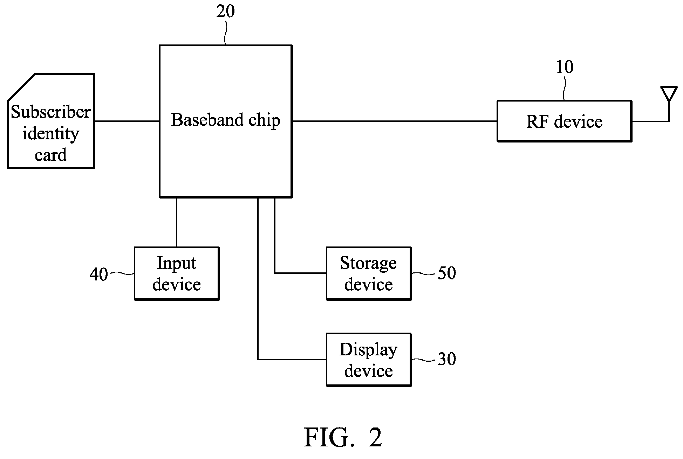

Fig. 2 is a block diagram illustrating a UE according to an example embodiment. AUEincludes a Radio Frequency (RF) device 10, a baseband chip 20, a display device 30, an input device 40, and a storage device 50, wherein the RF device 10, the display device 30, the input device 40, and the storage device 50 are coupled to the baseband chip 20. The baseband chip 20 is configured for controlling the communications between the subscriber identity card and the RF device 10, controlling the RF device 10 for wireless communications with the service network 140, sending a series of frame data (e.g. representing text messages, graphics, images,etc.) to the display device 30, receiving signals from the input device 40, and storing and retrieving data to and from the storage device 50.

In one embodiment, the baseband chip 20 may further include a processor, such as a Micro-Control Unit (MCU), Digital Signal Processor (DSP), or the like.

Additionally, the baseband chip 20 may further containother hardware components to perform baseband signal processing, including Analog-to-Digital Conversion (ADC)/Digital-to-Analog Conversion (DAC), gain adjusting, modulation/demodulation, encoding/decoding, and so on. The RF device 10 may receive RF wireless signals via an antenna, convert the received RF wireless signals to baseband signals, which are processed by the baseband chip 20, or receive baseband signals from the baseband chip 20 and convert the received baseband signals to RF wireless signals, which are later transmitted via the antenna. The RF device 10may also contain multiple hardware devices to perform radio frequency conversion. For example, the RF device 10may include a mixer to multiply the baseband signals with a carrier oscillated in the radio frequency of the supported wireless technology, wherein the radio frequency may be 900MHz, 1800MHz or 1900MHz utilized in GSM/GPRS/EDGEtechnology, or may be 900MHz, 1900MHz or 2100MHz utilized in WCDMA technology, or may be 900MHz, 2100MHz, or 2.6GHz utilized in LTE/LTE-A/TD-LTEtechnology, or another radio frequency, depending on the wireless technologyin use.

In one embodiment, the baseband chip 20 may further include an interface (not shown) to handle the connection to the subscriber identity card. The subscriber identity card may be provided in compliance with the specification of one or more of the wireless technology utilized by the service network 140, and is used to store subscription information. For example, the subscriber identity card may be a Subscriber Identity Module (SIM) card for the service network 140 being a GSM/GPRS/EDGEsystem or WCDMA system, or the subscriber identity card may be a Universal SIM (USIM) card for the service network 140 being a WCDMA system or LTE/LTE-A/TD-LTEsystem.

Alternatively, the subscriber information may be directly written into the UE, without the need for any socket to insert any subscriber identity card, or the subscriber information may be provided by a virtual subscriber identity card stored in the storage device 50, and the application is not limited thereto.

The display device 30 may be a Liquid-Crystal Display (LCD), Light-Emitting Diode (LED) display, or Electronic Paper Display (EPD), etc., for providing a display function. Alternatively, the display device 30 may further include one or more touch sensors disposed thereon or thereunder for sensing touches, contacts,or approximationsof objects, such as fingers or styluses.

The input device 40 may include one or more buttons, a keyboard, a mouse, a touch pad, a video camera, a microphone, and/or a speaker, etc., serving as the Man-Machine Interface (MMI) for interaction with users.

The storage device 50 may be a memory, such as a FLASH memory or a Non-volatile Random Access Memory (NVRAM), or a magnetic storage device, such as a hard disk or a magnetic tape, or an optical disc, or any combination thereof for storing instructions and/or program code of communication protocol or applications.

It should be understood that the components described in the embodiment of Fig. 2 are for illustrative purposes only and are not intended to limit the scope of the application.

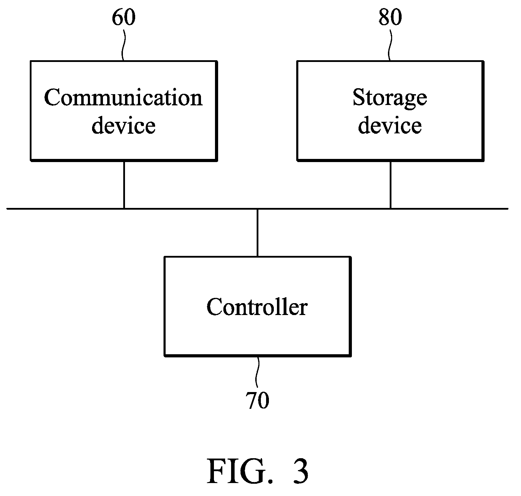

Fig. 3 is a block diagram illustrating a ProSe functionality device according to an embodiment of the application. The ProSe functionality device is responsible for providing the ProSe function. The ProSe functionality device includes a communication device 60, a controller 70, and a storage device 80. The communication device 60 is responsible for performing the functionality of wired and/or wireless communications with the UEs 110 to 130, other network nodes (e.g., HSS) of the service network 140 or another service network, and the ProSe App server 150. For example, if the communication device 60 supports the function of wired communication, it may include a cable modem, an Asymmetric Digital Subscriber Line (ADSL) modem, a Fiber-Optic Modem (FOM), an Ethernet network interface, or another wired interface. If the communication device 60 supports the function of wireless communication, it may includean antenna, an RF device, and a baseband chip. The detailed description of the antenna, RF device, and baseband chip is similar to the embodiment of Fig. 2 as described above, and is not repeated here for brevity.

The controller 70 may be a general-purpose processor, an Micro Control Unit (MCU), an application processor, a Digital Signal Processor (DSP), or the like, which includes various circuitry for providing the function of data processing and computing, controlling the operation of the communication device 60, and loading and executing a series of instructions and/or program codes from the storage device 80 to perform the method for handling a match report of the restricted ProSe discovery.

As will be appreciated by persons skilled in the art, the circuitry for performing such a method will typically include transistors that are configured in such a way as to control the operation of the circuitry in accordance with the functions and operations described herein. As will be further appreciated, the specific structure or interconnections of the transistors will typically be determined by a compiler, such as a register transfer language (RTL) compiler. RTL compilers may be operated by a processor upon scripts that closely resemble assembly language code, to compile the script into a form that is used for the layout or fabrication of the ultimate circuitry. Indeed, RTL is well known for its role and use in the facilitation of the design process of electronic and digital systems.

The storage device 80 may be a memory (e.g., RAM, Flash memory, or NVRAM, etc.), a magnetic storage device (e.g., magnetic tape or hard disk), an optical storage device (e.g., CD-ROM), or any combination thereof for storing instructions and/or program codes of communication protocols.

Although not shown, the ProSe functionality device may further include other functional units, such as an Input/Output (I/O) device (e.g., display device, button, keyboard, mouse, touch pad, touch screen, etc.), and a power supply, etc., and the application is not limited thereto.

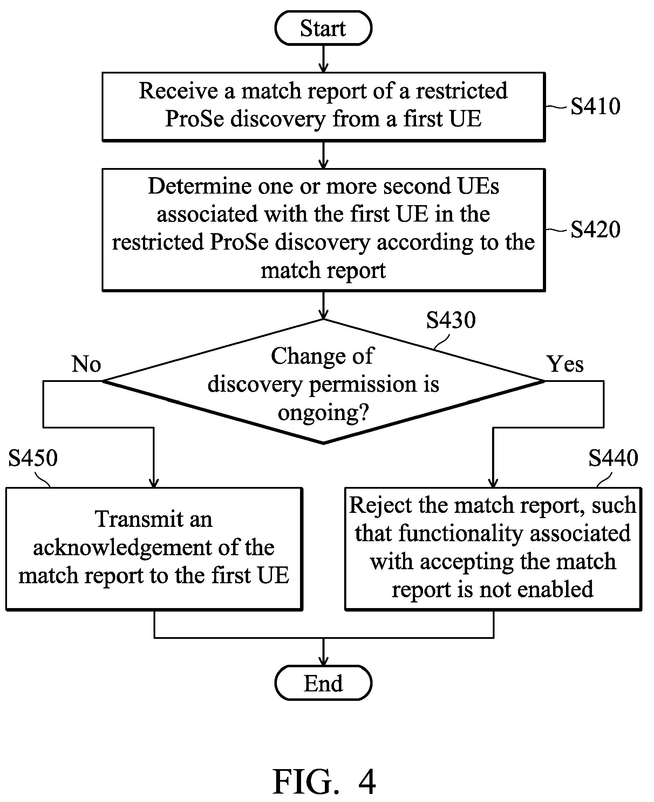

Fig. 4 is a flow chart illustrating a method for handling a match report of a restricted ProSe discovery according to an example embodiment. The method is specifically applied to the ProSe functionality device. To begin, the ProSe functionality device receives a match report of a restricted ProSe discovery from a first UE (step S410). The first UE is also referred to as a monitoring UE which transmits the match report in response to receiving a PC5_DISCOVERY message from an announcing UE, wherein the PC5_DISCOVERY message includes a ProSe code that matches with the monitoring UE's discovery filter.

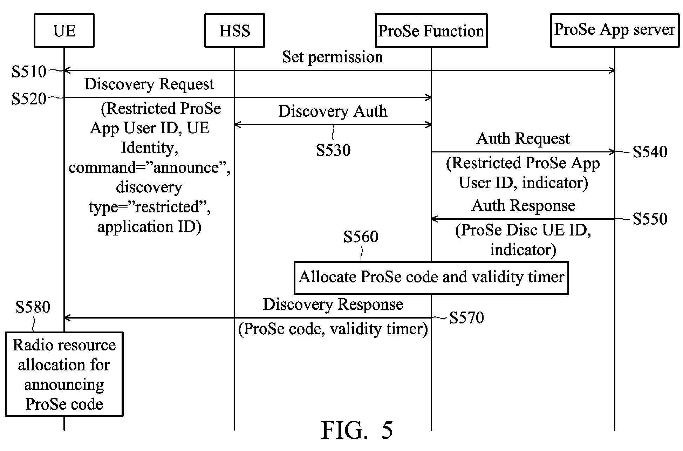

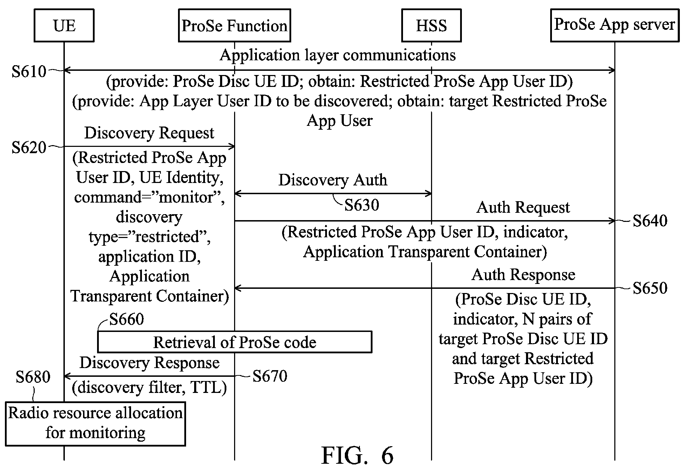

Specifically, before step S410, the announcing UE and the monitoringUE need to perform anAnnounce Request procedure and a Monitor Request procedure, respectively, to obtain the ProSe code and the discovery filter.The Announce Request procedure and the Monitor Request procedure will be further described later with Figs. 5 and 6.

Subsequent to step S410, the ProSe functionality device determines one or more second UEs associated with the first UE in the restricted ProSe discovery according to the match report (step S420). Specifically, the match report includes the Restricted ProSe App User ID of the first UE and the ProSe code received by the first UE, and the ProSe functionality device analyzes the ProSe code and identifies the second UE(s) that is/are announcing the ProSe code, to obtain the Restricted ProSeApp User ID(s) of the second UE(s) based on the ProSe code and the UE context of the first UE. The detailed description of how to obtain the Restricted ProSeApp User ID(s) of the second UE(s)is omitted herein since it is beyond the scope of the application, and reference may be made to the 3GPPTR 23.713.

In one embodiment, only one second UE is allocated with the ProSe code for a one-on-one application. In another embodiment, there may be multiple UEs allocated with the same ProSe code for a group talking application.

Subsequent to step S420, the ProSe functionality device determines whether a change of a discovery permission between the first UE and the second UEs is ongoing (step S430). In one embodiment, the change of the discovery permission indicates that the first UE has requested to revoke the discovery permission granted to any one of the second UEs. In another embodiment, the change of the discovery permission indicates that any one of the second UEs has requested to revoke the discovery permission granted to the first UE.

Ifa change of the discovery permission between the first UE and the second UEs is ongoing, the ProSe functionality device rejects the match report, such that functionality associated with accepting the match report is not enabled (step S440), and the method ends. In one embodiment, the ProSe functionality device may not transmit any response to the first UE upon rejecting the match report. In another embodiment, the ProSe functionality device may transmit an acknowledgement of the match report, which includes a rejection cause indicating that the discovery permission is outdated, to the first UE, upon rejecting the match report. For example, the rejection cause may be setto any unused value (e.g., a value between 9 and 255) for indicating the discovery permission being outdated.

Otherwise, if no change of the discovery permission between the first UE and the second UEs is ongoing, the ProSe functionality device transmits an acknowledgement of the match report, which includes one or more Restricted ProSeApp User IDs of the one or more second UEs, to the first UE (step S450), and the method ends.

Fig. 5 is a message sequence chart illustrating an Announce Request procedure according to an example embodiment. The UE initiating the Announce Request procedure may be referred to as an announcing UE. In step S510, the UE sets the permission for the restricted ProSe discovery with the ProSe App server using an application layer mechanism. Specifically, the application client in the UE retrieves the ProSe Discovery (Disc) UE ID and provides it to the ProSe App server. The ProSe App server allocates a Restricted ProSe App User ID for that ProSe Disc UE ID to the application client in the UE.

In step S520, when triggered by the application client to announce, the UE transmits a Discovery Request message to the ProSe functionality device. The Discovery Request message includes the Restricted ProSe App User ID and the UE Identity of the UE, the command type, the discovery type, and the application ID, wherein the UE Identity is set to the International Mobile Subscriber Identity (IMSI) of the UE, the command type is set to "announce", and the discovery type is set to "restricted discovery". The application ID represents a unique identifier of the UE application that has triggered the transmission of the Discovery Request message.

In step S530, the ProSe functionality device checks for the authorization of the application represented by the application ID. If there is no associated UE context, the ProSe functionality devicecommunicates with the HSS to check the authorization for discovery, and this is the case described here in this embodiment.

In steps S540 and S550, the ProSe functionality device verifies the requesting UE with the ProSe App server, if necessary. In other words, steps S540 and S550 may be skipped in another embodiment.

To further clarify, in step S540, the ProSe functionality device transmits an Authentication (Auth) Request message, including the Restricted ProSe App User ID and an indicator, to the ProSe App server. The ProSe functionality device locates the ProSe App server based on the application ID. The indicator is set to "restricted discovery/announce".

In step S550, the ProSe App server returns an Auth Response message, including the ProSe Disc UE ID and an indicator, to the ProSe functionality device. The ProSe Disc UE ID corresponds to the Restricted ProSe App User ID stored in the ProSe App server. The indicator is set to "restricted discovery/announce ack".

In step S560, the ProSe functionality device allocates a ProSe code and the associated validity timer. The ProSe code corresponds to the Restricted ProSe App User ID that was contained in the Discovery Request from the UE. The validity timer indicates for how long this ProSe code is going to be valid, and the UE will be authorized to announce this ProSe code for the duration of validity timer. The ProSe functionality device stores the Restricted ProSe App User ID, the ProSe code and the associated validity timer in the user context.

In step S570, the ProSe functionality device responds to the UE with a Discovery Response message including the allocated ProSe code and the validity timer.

In step S580, the UE starts announcing the receivedProSe code, using the radio resources authorized and configured by the service network to be used for ProSe as defined in 3GPP specifications for the LTE/LTE-A/TD-LTE technology.

Fig. 6 is a message sequence chart illustrating a Monitor Request procedure according to an example embodiment.The UE initiating the Monitor Request procedure may be referred to as a monitoring UE. In step S610, the application client in the UE retrieves its own ProSe Disc UE ID and provides it to the ProSe App server, and the ProSe App server allocates a Restricted ProSe App User ID for that ProSe Disc UE ID to the application client in the UE. Also, when the application client in the UE intends to discover the announcing UE of other users (e.g. friends in the application), the UE obtains the Restricted ProSe App User IDs (referred to herein as target Restricted ProSe App User IDs) of those users from the ProSe App server, by providing the Application Layer User IDs of those users to the ProSe App server.

In step S620, when triggered by the application client to monitor, the UEtransmits a Discovery Request message to the ProSe functionality device. The Discovery Request message includes the Restricted ProSe App User ID and the UE Identity of the UE, the command type, the discovery type, an application ID, and an Application Transparent Container, wherein the UE Identity is set to the IMSI of the UE, the command type is set to "monitor", the discovery type is set to "restricted discovery". The application ID represents a unique identifier of the application that has triggered the transmission of the Discovery Request message. The Application Transparent Container contains the Target Restricted ProSe App User IDs indicating what the UE is interested to monitor.

In step S630, the ProSe functionality device checks for the authorization of the application represented by the application ID. If there is no associated UE context, the ProSe functionalitycommunicates with the HSSto check the authorization for discovery, and this is the case described here in this embodiment.

In steps S640 and S650, the ProSe functionality device verifies the requesting UE with the ProSe App server.

To further clarify, in step S640, the ProSe functionality device transmits an Auth Request message, including the Restricted ProSe App User ID of the UE, an indicator, and the Application Transparent Container, to the Application Server indicated by the application ID. The indicator is set to "restricted discovery/monitor".

In step S650, if, based on the permission setting, the Restricted ProSe App User ID of the requesting UE is allowed to discover at least one of the target Restricted ProSe App User IDs contained in the Application Transparent Container, the ProSe App server returns an Auth Response to the ProSe functionality device. The Auth Response includes the ProSe Disc UE ID of the UE, anindicator, and N pairs of target ProSe Disc UE ID and target Restricted ProSe App User ID, wherein the indicator is set to "restricted discovery/monitor ack".

In step S660, if at least one of received pair of target ProSe Disc UE ID -target Restricted ProSe App User ID corresponds to a valid ProSe code, the ProSe functionality device retrieves the ProSe code corresponding to that target ProSe Disc UE ID, the application ID, and the target Restricted ProSe App User ID.

In step S670, based on the retrieved ProSe code and the associated validity timer, the ProSe functionality device allocates a discovery filter with the corresponding Time ToLive (TTL) and returns a Discovery Response message, including the discovery filter and the TTL, to the UE.

In step S680, the UE obtains the corresponding radio resources (authorized and configured by the service network to be used for ProSe as defined in 3GPPspecifications for the LTE/LTE-A/TD-LTE technology) and starts to monitor using the discovery filter.

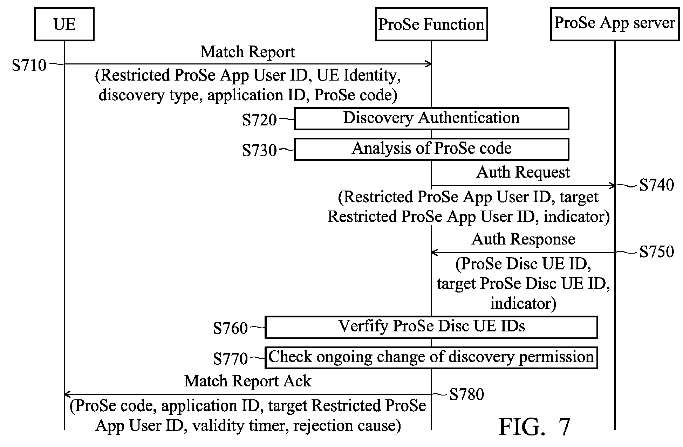

Fig. 7 is a message sequence chart illustrating a Match Report procedure according to an example embodiment. In step S710, responsive to the UE receiving a ProSe code that matches the discovery filter it obtained from the Monitor Request procedure, the UE transmits a Match Report message to the ProSe functionality device. The Match Report message includes the Restricted ProSe App User ID and the UE Identity of the UE, the discovery type, the application ID, and the ProSe Code, wherein the UE Identity is set to the IMSI of the UE, the application ID represents a unique identifier of the application that triggered the monitoring request, and the discovery type is set to "restricted discovery".

In step S720, the ProSe functionality device checks the authorization for the monitoring UE to perform the restricted ProSe discovery.

In step S730, the ProSe functionality device analyses the ProSe code and identifies in the UE context of the monitoring UE the corresponding target Restricted ProSe App User ID(s), i.e., the Restricted ProSe App User ID(s) of the announcing UE or the UEs sharing the same ProSe code with the announcing UE (any one of the UEs sharing the same ProSe code are referred to as the target UEs herein).

In step S740, the ProSe functionality device transmits an Auth Request message to the ProSe App server indicated by the application ID. The Auth Request message includes the Restricted ProSe App User ID of the requesting UE, the target Restricted ProSe App User ID(s), and an indicator, wherein the indicator is set to "restricted discovery/match".

In step S750, based on the permission setting, it is determined that the requesting UE is allowed to discover the target UE(s), so the ProSe App server returns an Auth Response message to the ProSe functionality device. The Auth Response message includes the ProSe Disc UE ID of the requesting UE, the target ProSe Disc UE ID(s), and an indicator. The ProSe Disc UE ID of the requesting UE corresponds to the Restricted ProSe App User ID of the requesting UE. The target ProSe Disc UE ID(s) corresponds to the target Restricted ProSe App User ID(s). The indicator is set to "restricted discovery/match ack". Alternatively, the Auth Response message may also include certain metadata, e.g., welcome message, corresponding to the target ProSe Disc UE ID(s).

In step S760, the ProSe functionality device verifies that the received ProSe Disc UE ID belongs to the requesting UE, and the target ProSe Discovery UE ID(s) is/arethe same as the stored target ProSe Disc UE ID(s).

In another embodiment, steps S740 to S760 may be skipped if the ProSe functionality can verify the requesting UE and target UE(s) without the assistance of the ProSe App server.

In step S770, the ProSe functionality device checks if a change of the discovery permission between the monitoring UE and the target UE(s) is ongoing. Specifically, the ProSe functionality device may have received a request for changing the discovery permission between the monitoring UE and the target UE(s), and before applying the change (e.g., the user of the requesting UEwants to revoke the friendship with the user of the target UE on Facebook, or the user of the target UEwants to revoke the friendship with the user of the requesting UE on Facebook), the ProSe functionality device may have to determine the affected UEs and decide whether to revoke the defriended UE's discovery filter or allocate a new discovery filter or new ProSe code to the un-defriendedUEs. It is noted that the processes regarding examining the change of the discovery permission may exhibit latency.

In step S780, it is assumed that a change of the discovery permission between the monitoring UE and the target UE(s) is ongoing, the ProSe functionality device rejects the match report and returns a Match Report Acknowledge (Ack) message to the UE. The Match Report Ack message includes a rejection causeindicating that the discovery permission is outdated. Alternatively, the ProSe functionality device may only rejectthe match report and does not reply to the UE.

In another embodiment, if no change of the discovery permission between the monitoring UE and the target UE(s) is ongoing, then the ProSe functionality device may accept the match report and return a Match Report Ack message to the UE, wherein the Match Report Ack message includes an application ID, the target Restricted ProSe App User ID(s), and a validity timer. The application ID represents the unique identifier of the applicationthat triggered the monitoring request.

Other detailed description of the Announce Request procedure, the Monitor Request procedure, and the Match Report procedure is omitted herein for brevity since it is well known and understood by persons skilled in the art, and reference may be made to 3GPP TR23.713andTS 24.334.

In view of the forgoing, it will be appreciated that, in some embodiments, the Match Report procedure of the restricted ProSe discovery is improved by enabling the ProSe functionality device to check if a change of the discovery permission between the concerned UEs is ongoing and then rejectthe match report when there's a change ongoing. Advantageously, this prevents the ProSe functionality device from accepting the match report with outdated discovery permission.

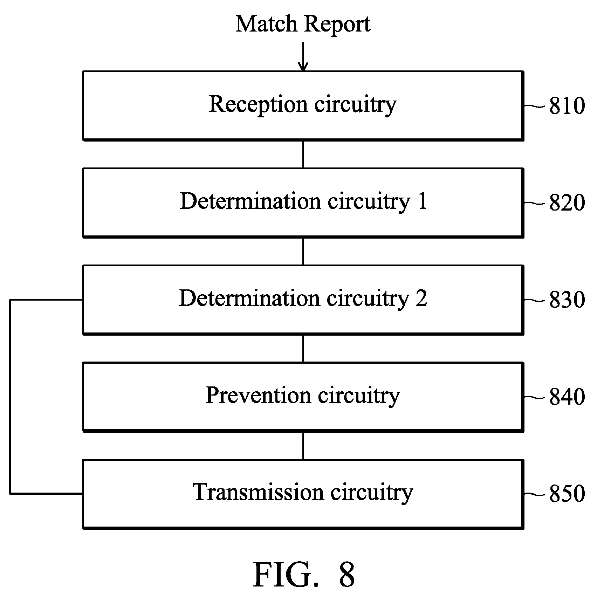

Fig. 8 is aschematic diagram illustrating circuitry blocks of a ProSe functionality device according to an embodiment of the application. As shown in Fig. 8, a ProSe functionality device includes reception circuitry 810, determination circuitry 820and 830, prevention circuitry 840, and transmission circuitry 850.The reception circuitry 810 is configured to receive a match report of a restricted ProSe discovery from a monitoring UE. The determination circuitry 820 is configured todetermine one or more target UEs associated with the monitoring UE in the restricted ProSe discovery according to the match report. The determination circuitry 830 is configured to determine whether a change of a discovery permission between the monitoring UE and the target UEs is ongoing. The prevention circuitry 840 is configured torejectthe match report in response to the change of the discovery permission being ongoing, such that functionality associated with accepting the match report is not enabled.The transmission circuitry 850 is configured to transmit an acknowledgement of the match report, which includes a rejection cause indicating that the discovery permission is outdated, to the monitoring UE, in response to the change of the discovery permission being ongoing. Moreover, the transmission circuitry 850 is configured to transmit an acknowledgement of the match report, which includes one or more Restricted ProSe App User IDs of the one or moretarget UEs, to the monitoring UE, in response to no change of the discovery permission being ongoing.Please note that, the reception circuitry 810, the determination circuitry 820 and 830, the prevention circuitry 840, and the transmission circuitry 850 may be realized by one or more of the hardware components of the ProSe functionality device as described in the embodiment of Fig. 3. It is to be understood that the circuitry blocks as shown in Fig. 8 is merely an illustrative example, and the application is not limited thereto. For example, the ProSe functionality device may include other circuitry for carrying out the detailed functions or operations in the aforementioned embodiments.

While the application has been described by way of example and in terms of preferred embodiment, it is to be understood that the application is not limited thereto. Those who are skilled in this technology can still make various alterations and modifications without departing from the scope of this application. For example, the method for handling a match report of the restricted ProSe discovery may also be applied to ProSe functionality devices in compliance with any evolutionary development of the LTE/LTE-A/TD-LTE technology. Therefore, the scope of the application shall be defined and protected by the following claims and their equivalents.

## Claims

1. A method for handling a match report, executed by a Proximity-based Service (ProSe) functionality device, the method comprising:
receiving a match report of a restricted ProSe discovery from a first User Equipment (UE) (110 or 120 or 130);
determining one or more second UEs(110 or 120 or 130) associated with the first UE(110 or 120 or 130) in the restricted ProSe discovery according to the match report;
determining whether a change of a discovery permission between the first UE(110 or 120 or 130) and the second UEs(110 or 120 or 130) is ongoing; and
rejecting the match report in response to the change of the discovery permission being ongoing, such that functionality associated with accepting the match report is not enabled.

2. The method of claim 1, further comprising:
transmitting an acknowledgement of the match report, which comprises a rejection cause indicating that the discovery permission is outdated, to the first UE(110 or 120 or 130), in response to the change of the discovery permission being ongoing.

3. The method of claim 1 or 2, wherein the rejection cause has a value between 9 and 255.

4. The method of claim 1, further comprising:
transmitting an acknowledgement of the match report, which comprises one or more restricted ProSe application user identities of the one or more second UEs(110 or 120 or 130), to the first UE(110 or 120 or 130), in response to no change of the discovery permission being ongoing.

5. The method of any of the preceding claims, wherein the change of the discovery permission indicates that the first UE(110 or 120 or 130) has requested to revoke the discovery permission granted to any one of the second UEs(110 or 120 or 130).

6. The method of any of the preceding claims, wherein the change of the discovery permission indicates that any one of the second UEs (110 or 120 or 130) has requested to revoke the discovery permission granted to the first UE(110 or 120 or 130).

7. A Proximity-based Service (ProSe) functionality device, comprising:
reception circuitry (810), configured to receive a match report of a restricted ProSe discovery from a first User Equipment (UE)(110 or 120 or 130);
first determination circuitry (820), configured to determine one or more second UEs(110 or 120 or 130) associated with the first UE(110 or 120 or 130) in the restricted ProSe discovery according to the match report;
second determination circuitry (830), configured to determine whether a change of a discovery permission between the first UE(110 or 120 or 130) and the second UEs(110 or 120 or 130) is ongoing; and
prevention circuitry (840), configured to rejectthe match report in response to the change of the discovery permission being ongoing, such that functionality associated with accepting the match report is not enabled.

8. The ProSe functionality device of claim 7, further comprising:
transmission circuitry (850), configured to transmit an acknowledgement of the match report, which comprises a rejection cause indicating that the discovery permission is outdated, to the first UE(110 or 120 or 130), in response to the change of the discovery permission being ongoing.

9. The ProSe functionality device of claim 8, wherein the rejection cause has a value between 9 and 255.

10. The ProSe functionality device of claim 7, further comprising:
transmission circuitry (850), configured to transmit an acknowledgement of the match report, which comprises one or more restricted ProSe application user identities of the one or more second UEs(110 or 120 or 130), to the first UE(110 or 120 or 130), in response to no change of the discovery permission being ongoing

11. The ProSe functionality device of any of claims 7 to 10, wherein the change of the discovery permission indicates that the first UE(110 or 120 or 130) has requested to revoke the discovery permission granted to any one of the second UEs(110 or 120 or 130).

12. The ProSe functionality device of any of claims 7 to 11, wherein the change of the discovery permission indicates that any one of the second UEs(110 or 120 or 130) has requested to revoke the discovery permission granted to the first UE(110 or 120 or 130).
